# EUROPEAN PATENT APPLICATION

(11) **EP 4 636 289 A1**
(43) Date of publication of application: **22.10.2025**
(21) Application number: 23903404.4
(22) Date of filing: 07.12.2023
(51) Int. Cl.: F16K 17/04, F16K 51/00, F04C 28/28, F04C 29/00, F04B 39/10, F04B 49/10

(54) **COMPRESSOR SAFETY VALVE**

(30) Priority: 14.12.2022 JP 2022199163
(71) Applicant: Valeo Japan Co., Ltd., Kumagaya-Shi SAITAMA 360-0193 (JP)
(72) Inventor: OHK, Changheon, Kumagaya-shi Saitama 360-0193 (JP); KANEKO, Yuki, Kumagaya-shi Saitama 360-0193 (JP); ENDO, Takayuki, Kumagaya-shi Saitama 360-0193 (JP)
(74) Representative: Valeo Powertrain Systems
(86) International application number: PCT/JP2023/043797
(87) International publication number: WO 2024/128117

(57) **Abstract**

[Problem] To provide a compressor safety valve in which a cover is mounted on a valve main body with an elastic body interposed to thereby restrict a direction of ejection of exhaust gas and eliminate the problem of the exhaust gas being ejected from gaps in the cover, wherein the compressor safety valve does not require the use of an elastic body having a complex shape, does not require assembly orientation of the elastic body, and is easily assembled.

[Solution] A compressor safety valve comprising: a columnar valve main body 2 comprising an internal passage 5 through which exhaust gas flows, a second end portion 9 in which an outflow port 8 of the internal passage 5 opens, and a mating portion 10 formed on an outer circumferential surface; a cover 3 comprising leg portions 31a-31d which mate with the mating portion 10 of the valve main body 2, and a shielding portion 32 opposite the second end portion 9; and an 0-ring 4 which is sandwiched between the second end portion 9 of the valve main body 2 and the shielding portion 32 of the cover 3 so as to surround the outflow port 8, wherein a groove portion 33 is formed in the shielding portion 32, from a portion facing the inside of the 0-ring 4 up to an outer edge of the shielding portion 32, the inside and the outside of the 0-ring 4 are able to communicate by means of the groove portion 33, and the direction of ejection of exhaust gas is restricted.

## Description

### [Technical Field]

The present invention relates to a safety valve for a compressor which is used in a vehicle refrigeration cycle or the like.

### [Background Art]

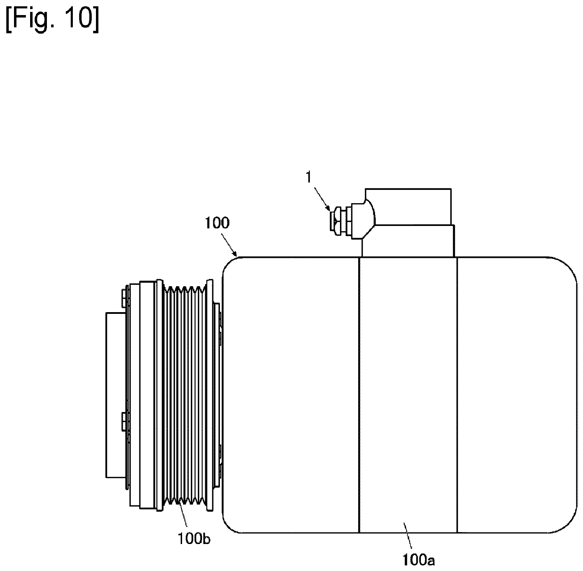

A compressor used in an air conditioner refrigeration cycle is installed inside a vehicle engine compartment. This compressor comprises a safety valve. If there is an abnormal rise in pressure inside the compressor, the safety valve releases exhaust gas containing a lubricating oil and a refrigerant gas to the outside. In the compressor 100 shown in fig. 10, for example, a safety valve 1 is installed on a side portion of a cylinder head 100a with an ejection port facing toward a pulley 100b, and when there is an abnormal rise in pressure inside the compressor, high-pressure exhaust gas is ejected from inside the compressor toward the front (the pulley side) of the compressor.

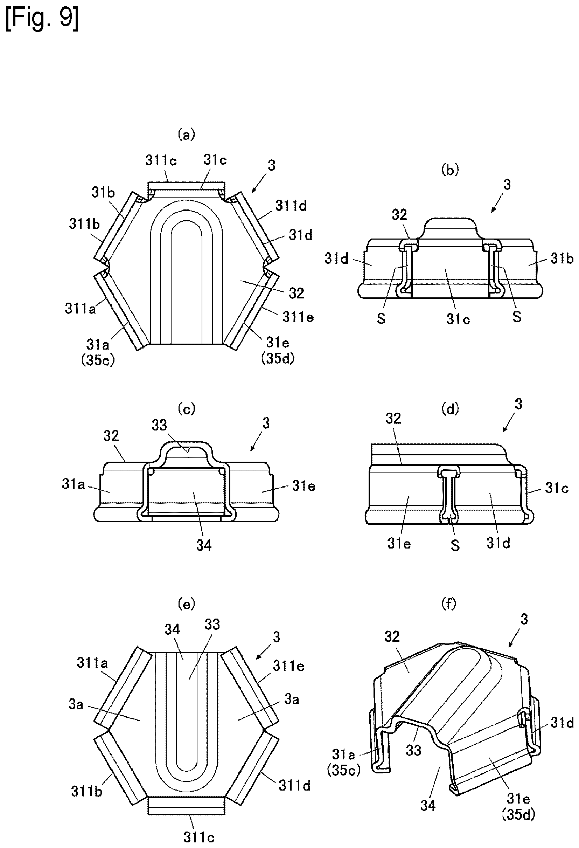

However, there is a risk of the lubricating oil in the exhaust gas ejected from the safety valve 1 smoking or igniting, etc. when it is blown against high-temperature parts inside the engine compartment. Furthermore, when the exhaust gas is ejected toward the pulley which holds a drive belt for transmitting power from the engine, as shown in fig. 9, the lubricating oil in the exhaust gas causes slipping of the drive belt or an electromagnetic clutch. The problem of impeding power transmission to auxiliary equipment including the compressor is therefore a concern.

A safety valve such as described in Patent Document 1 would therefore be feasible for avoiding the problem of exhaust gas ejected from a valve main body being ejected in an unintended direction.

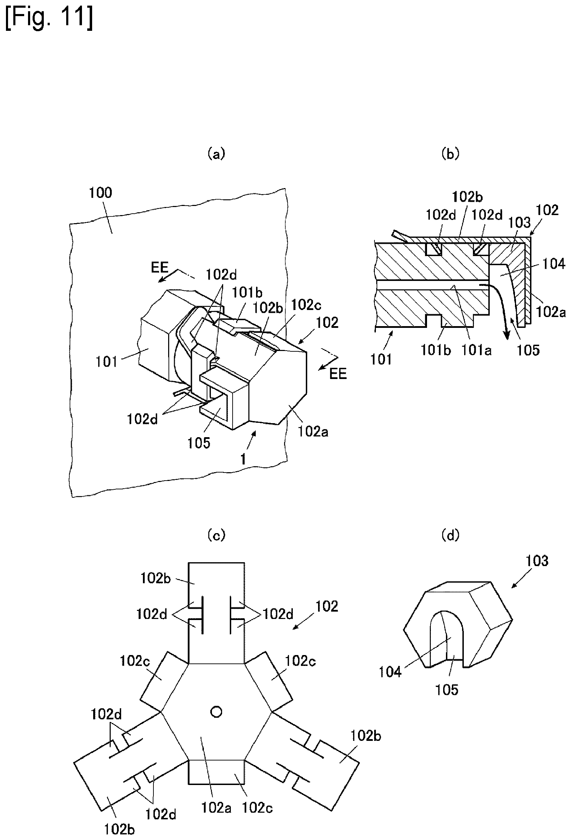

As shown in fig. 11, this safety valve comprises: a cover 102 detachably fitted to a valve main body 101; and an elastic body 103 which closely contacts the valve main body 101 while covering a discharge hole 101a in the valve main body 101, and which is sandwiched between the valve main body 101 and the cover 102 in a compressed state. A groove 104 is formed on a close-contact surface of the elastic body 103 closely contacting the valve main body 101, from a portion opposite the discharge hole 101a up to an outer edge. A discharge gas flow path 105 is provided by means of the groove 104 and a surface of the valve main body 101 covering the groove 104, so as to eject the exhaust gas discharged from the discharge hole 101a in the direction of the outer edge where the groove 104 opens.

Here, as shown in fig. 11(c), the cover 102 is formed by a plate material comprising: a hexagonal shielding portion 102a; and leg portions 102b, 102c protruding radially from five sides of the shielding portion 102a, excluding one side thereof, corresponding to the outer edge of the elastic body 103 where the groove 104 opens. The cover 102 is produced by bending each of the leg portions 102b, 102c substantially at right angles along each side of the shielding portion 102a. Locking hooks 102d formed on the leg portions 102b are locked to locking protrusions 101b on the valve main body 101.

Gaps (slits) extending from the shielding portion are therefore formed between the circumferentially-adjacent leg portions of the cover. However, the elastic body 103 in which the groove 104 is formed from the portion opposite the discharge hole 101a up to the outer edge is interposed between the cover 102 and the valve main body 101, so the exhaust gas discharged from the discharge hole 101a is ejected only from the outer edge portion of the elastic body 103 where the groove 104 opens It is therefore possible to avoid the problem of exhaust gas being ejected in an unintended direction through the gaps (slits).

### [Prior Art Documents]

### [Patent Documents]

[Patent Document 1] JP H9-166081 A

### [Summary of the Invention]

### [Problems to be Solved by the Invention]

However, since the groove 104 that forms the discharge gas flow path 105 is conventionally formed in the elastic body 103 sandwiched between the shielding portion 102a of the cover 102 and an end face of the valve main body 101, this makes the shape of the elastic body more complex and the problem of of increased manufacturing costs is a concern. Furthermore, when the cover 102 is mounted on the valve main body 101, it is necessary to align the orientation of the outer edge of the elastic body 103 where the groove 104 opens with the part of the cover 102 where no leg portion is provided, therefore requiring attention to the assembly orientation of the elastic body and making the process of assembling the safety valve more difficult.

The present invention has been devised in light of this situation, and the main problem addressed thereby lies in providing a compressor safety valve which solves the problem of exhaust gas being ejected from any gaps formed in a cover, which furthermore does not require the use of an elastic body having a complex shape, and which can eliminate the need for orientating assembly of the elastic body during assembly, and can be easily assembled.

### [Means for Solving the Problems]

In order to solve the problem above, a compressor safety valve according to the present invention constitutes, in a first aspect:
a compressor safety valve for expelling exhaust gas to the outside when an internal pressure of a compressor rises above a predetermined pressure, the compressor safety valve comprising:
a columnar valve main body comprising an internal passage through which exhaust gas flows, a first end portion in which an inflow port of the internal passage opens, a second end portion in which an outflow port of the internal passage opens, and a mating portion formed on an outer circumferential surface;
a cover comprising leg portions which mate with the mating portion of the valve main body, and a shielding portion opposite the second end portion; and
an annular elastic body which is sandwiched between the second end portion of the valve main body and the shielding portion of the cover so as to surround the outflow port,
characterized in that a groove portion is formed in the shielding portion, from a portion facing the inside of the elastic body up to an outer edge of the shielding portion.

Accordingly, the elastic body is sandwiched between the second end portion and the shielding portion so as to surround the outflow port of the internal passage of the valve main body, but the groove portion is formed in the shielding portion from a portion facing the inside of the elastic body up to the outer edge, therefore enabling communication between the inside and the outside of the elastic body by means of the groove portion, and forming a discharge passage for ejecting exhaust gas discharged from the outflow port to the outside. Consequently, if the elastic body sandwiched between the second end portion and the shielding portion has an annular shape surrounding the outflow port, there is no longer any need for the elastic body to have a complex shape.

Furthermore, the annular elastic body is sandwiched between the second end portion of the valve main body and the shielding portion so as to surround the outflow port, so there is no problem of exhaust gas leaking other than from the groove portion even if gaps are formed between leg portions radially outside the elastic body, or if gaps are formed between the shielding portion and the leg portions.

Furthermore, the groove portion enables communication between the part of the shielding portion facing the inside of the elastic body and the part facing the outside, whichever circumferential part of the elastic body is opposite the groove portion, since the elastic body is annular. The inside and the outside of the elastic body are therefore connected only by the groove portion formed in the shielding portion, so there is no need for orientating assembly of the elastic body, and assembly is simplified.

Here, in a compressor safety valve according to a second aspect, which is preferably as disclosed in the first aspect, the elastic body may be closely contacted along the entire circumference with an abutment face of the second end portion of the valve main body, and may be closely contacted with the shielding portion of the cover excluding the part opposite the groove portion.

The elastic body is closely contacted with the shielding portion excluding the part where the abutment face of the second end portion of the valve main body faces the groove portion, so even if gaps (slits) are provided between adjacent leg portions, or if gaps are formed between the leg portions and the shielding portion, the exhaust gas is ejected only from the groove portion, and it is possible to solve the problem of exhaust gas leaking through the gaps (slits).

Here, in a compressor safety valve according to a third aspect, which is preferably as disclosed in the first or second aspect, the elastic body may have any shape provided that it is annular, and a general-purpose elastic body such as an 0-ring may be used, for example.

By using an 0-ring as the elastic body, there is no need for any special processing of the elastic body, and there is also no need to orientate assembly of the elastic body, so assembly is simplified.

Furthermore, in a compressor safety valve according to a fourth aspect, which is preferably as disclosed in the first to third aspects, a boss portion having a smaller outer diameter than the inner diameter of the elastic body may be formed on the abutment face of the valve main body so as to protrude from the abutment face, and the elastic body may be arranged around the boss portion provided on the abutment face of the valve main body.

With such a configuration, the elastic body is arranged around the boss portion, so the elastic body can be easily and securely positioned, and there is also no longer a problem of the elastic body falling out from a radial opening portion due to the pressure of high-pressure exhaust gas when the high-pressure exhaust gas is blown out from the outflow port.

In addition, in a compressor safety valve according to a fifth aspect, which is preferably as disclosed in the first to third aspects, a radial opening portion may be formed in the cover adjacently to the groove portion on the outer edge of the shielding portion, and restricting portions for restricting radial movement of the elastic body may be provided at the radial opening portion.

The restricting portions for restricting radial movement of the elastic body are provided at the radial opening portion, so even if the boss portion is not formed on the abutment face of the valve main body and a radial opening portion having a larger width than the outer diameter of the elastic body is formed in the cover, it is possible to avoid the problem of the elastic body becoming radially misaligned and falling out from the radial opening portion when high-pressure exhaust gas is blown out from the outflow port.

Here, in a compressor safety valve according to a sixth aspect, which is preferably as disclosed in the fifth aspect, the width of the radial opening portion may be formed to be smaller than the outer diameter of the elastic body by means of the restricting portions.

Here, in a compressor safety valve according to a seventh aspect, which is preferably as disclosed in the sixth aspect, the restricting portions may be formed by means of protrusions protruding from the leg portions into the radial opening portion.

With such a configuration, the width of the radial opening portion is reduced by means of the restricting portions, and it is therefore possible to prevent the problem of the elastic body becoming radially misaligned and falling out from the radial opening portion when high-pressure exhaust gas is blown out from an outflow hole.

Furthermore, in a compressor safety valve according to an eighth aspect, which is preferably as disclosed in the sixth aspect, the restricting portions
may be formed by leg portions adjacent to the radial opening portion. That is to say, radial movement of the elastic body may be restricted by making the gap between the leg portions on both sides of the radial opening portion smaller than the outer diameter of the elastic body.

With such a configuration, the restricting portions are formed by the leg portions, so there is no need to add a new component to restrict radial movement of the elastic body.

Moreover, in a compressor safety valve according to a ninth aspect, which is preferably as disclosed in the first to seventh aspects, a plurality of the leg portions may be formed in a circumferential direction of the shielding portion, each of the leg portions being integrally formed with the outer edge of the shielding portion.

Furthermore, in a compressor safety valve according to a tenth aspect, which is preferably as disclosed in the first to seventh aspects, a plurality of the leg portions may be formed in a circumferential direction of the shielding portion, among which one leg portion may be integrally formed with the outer edge of the shielding portion, and other leg portions may be linked along a circumferential direction of the shielding portion starting from said one leg portion so that all of the leg portions may be integrally formed.

### [Effects of the Invention]

As stated above, with the compressor safety valve according to the present invention, the annular elastic body is sandwiched between the second end portion and the shielding portion so as to surround the outflow port of the internal passage of the valve main body, and a discharge passage for exhaust gas is formed by forming the groove portion from a portion on the shielding portion facing the inside of the elastic body up to the outer edge, thereby preventing exhaust gas from being ejected from gaps or slits formed between the leg portions of the cover, or between the shielding plate and the leg portions.

Furthermore, there is no need to use an elastic body having a complex shape, and during assembly it is sufficient for the cover to be mounted while adjusting the position at which the groove portion opens so that it faces the desired direction of ejection, and therefore assembly can also be simplified.

### [Brief Description of the Drawings]

[Fig. 1]

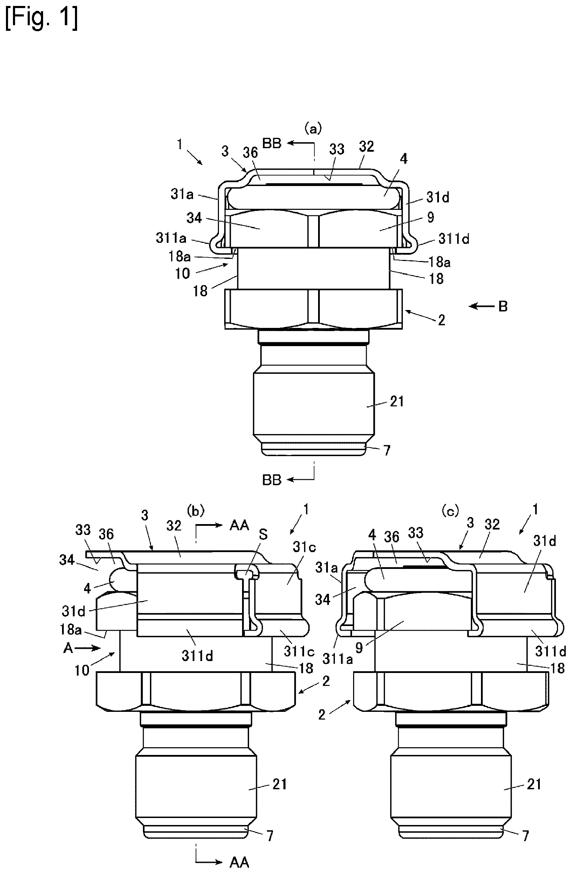

   Fig. 1 shows a first embodiment of a compressor safety valve according to the present invention, where (a) is a front view thereof seen from the direction A in (b). (b) is a side view in which the safety valve of (a) is seen from the direction B. (c) is an oblique view seen from an intermediate angle between (a) and (b).
[Fig. 2]

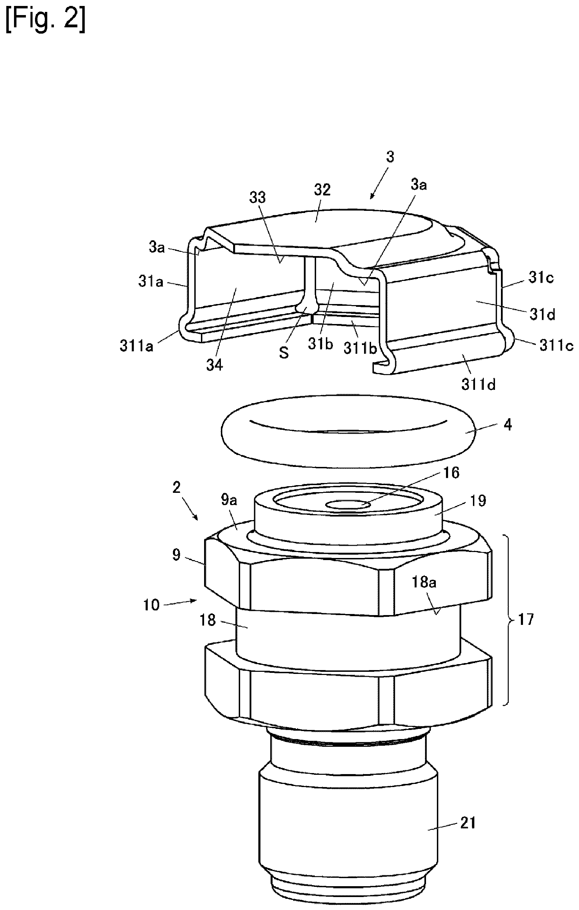

   Fig. 2 is an exploded oblique view of the compressor safety valve according to the first embodiment.
[Fig. 3]

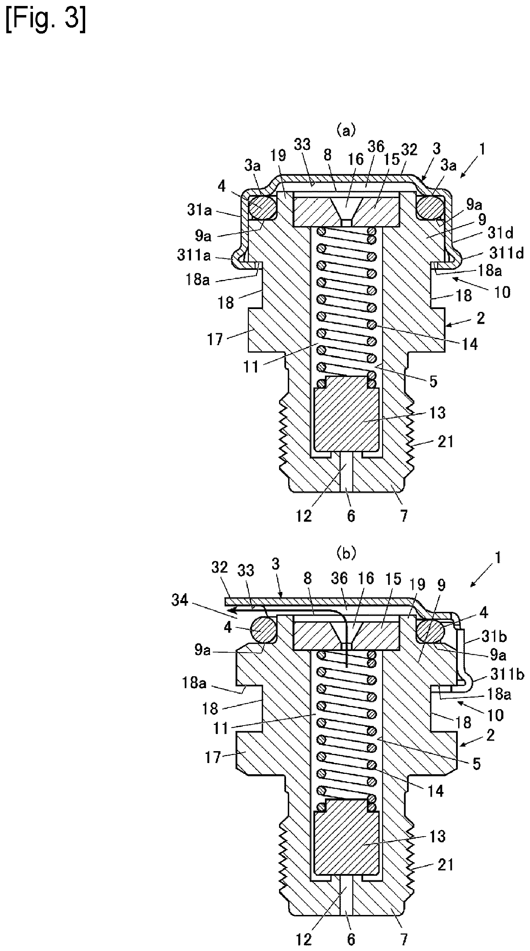

   Fig. 3 is a view in cross section of the compressor safety valve according to the first embodiment, where (a) is a view in cross section along the line AA-AA in fig. 1(b). (b) is a view in cross section of the safety valve in fig. 1(a) taken along the line BB-BB.
[Fig. 4]

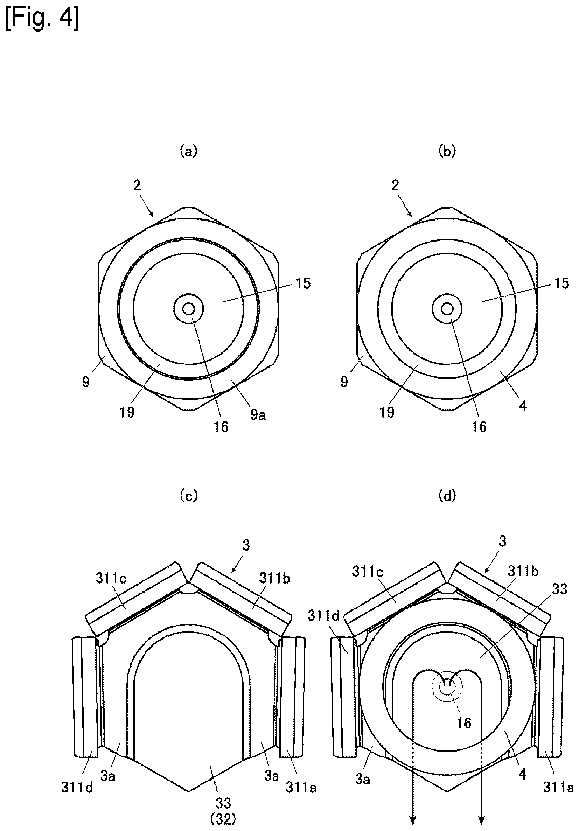

   Fig. 4(a) shows an end face of a second end portion of a valve body, fig. 4(b) shows a state in which an annular elastic body (0-ring) is disposed around a boss portion on the end face of the second end portion of the valve body, fig. 4(c) shows the inside of a cover, and fig. 4(d) shows a state in which the annular elastic body (0-ring) is disposed inside the cover.
[Fig. 5]

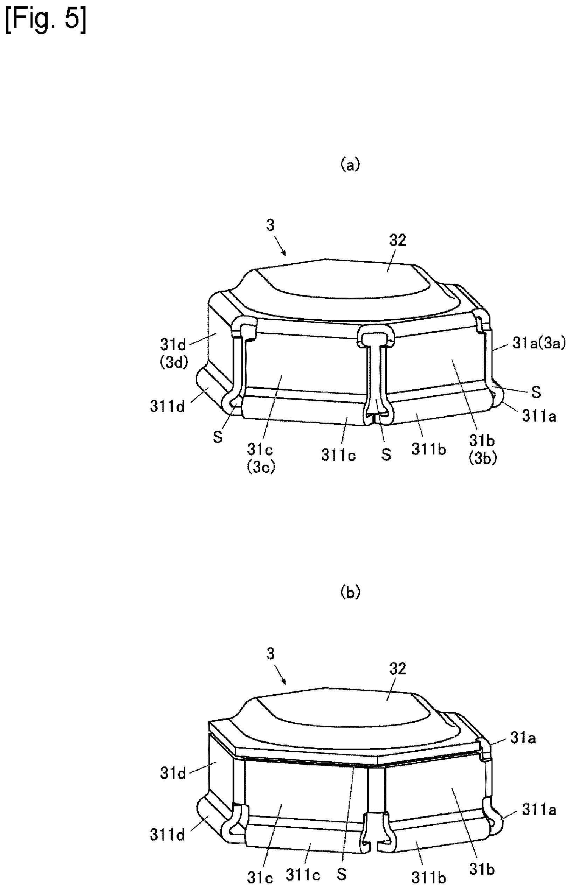

   Fig. 5(a) is an oblique view in which an example of the cover is seen from the opposite side to a radial opening portion, and fig. 5(b) is an oblique view in which another example of the cover is seen from the opposite side to the radial opening portion.
[Fig. 6]

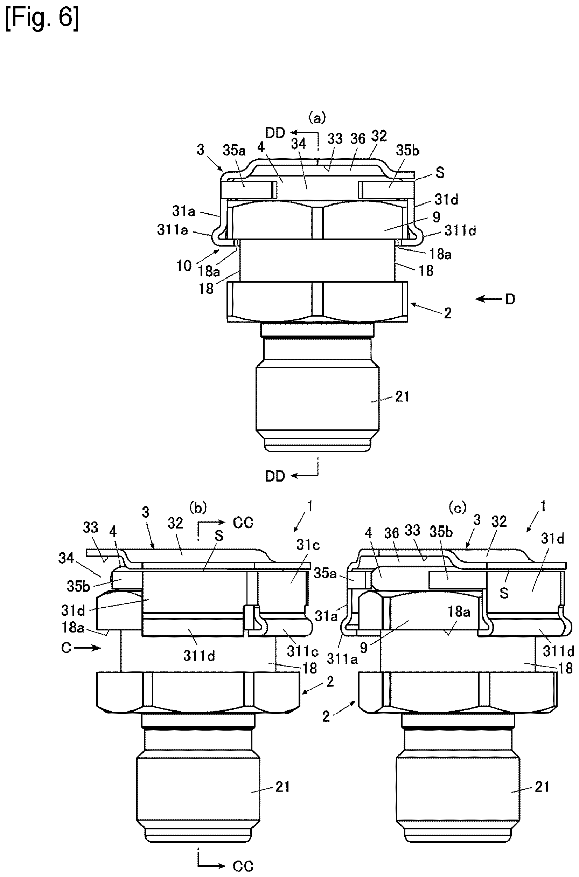

   Fig. 6 shows a second embodiment of a compressor safety valve according to the present invention, where (a) is a front view thereof seen from the direction C in (b). (b) is a side view in which the safety valve of (a) is seen from the direction D. (c) is an oblique view seen from an intermediate angle between (a) and (b).
[Fig. 7]

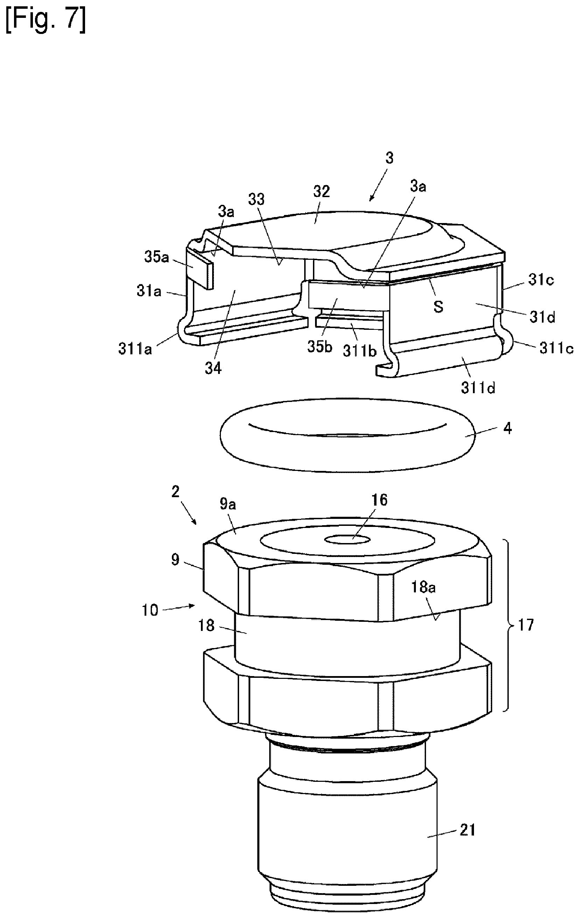

   Fig. 7 is an exploded oblique view of the compressor safety valve according to the second embodiment.
[Fig. 8]

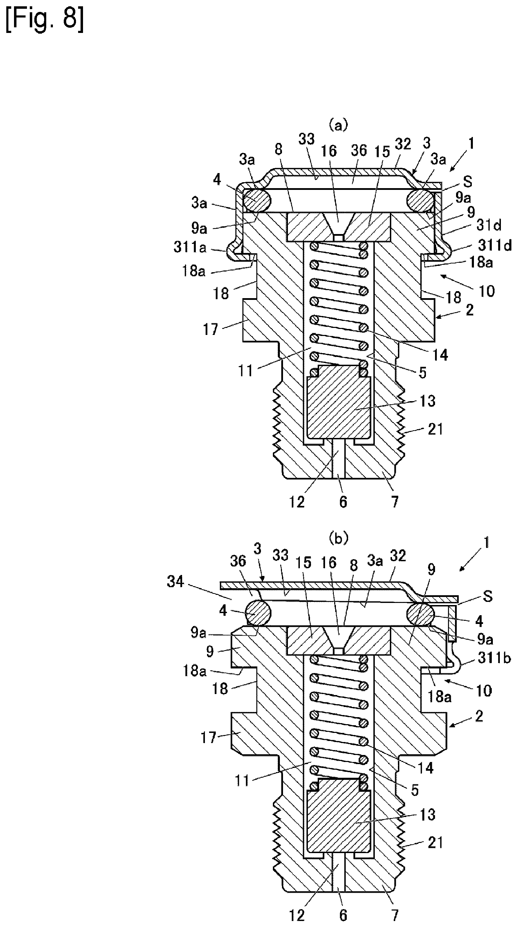

   Fig. 8 is a view in cross section of the compressor safety valve according to the second embodiment, where (a) is a view in cross section along the line CC-CC in fig. 6(b). (b) is a view in cross section along the line DD-DD in fig. 6(a).
[Fig. 9]
   Fig. 9 shows another example of the cover, where (a) is a plan view thereof, (b) is a back view thereof, (c) is a front view thereof, (d) is a right-side view thereof, (e) is a bottom view thereof, and (f) is an oblique view thereof.
[Fig. 10]
   Fig. 10 shows an example of a compressor fitted with a safety valve.
[Fig. 11]
   Fig. 11 shows a conventional safety valve, where (a) is an oblique view thereof, (b) is a view in cross section along the line EE-EE in (a), (c) is a development of a cover, and (d) is an oblique view of an elastic body.

### [Preferred Embodiments of the Invention]

Embodiments according to the present invention will be described below with reference to the appended drawings.

Fig. 1-3 show a first embodiment of a safety valve 1 according to the present invention.

The safety valve 1 comprises: a valve main body 2 fixedly screwed into a housing of a compressor; a cover 3 mounted on an end portion of the valve main body 2 on a gas outflow side (a tip end portion of the valve main body protruding from the housing of the compressor); and an 0-ring 4 serving as an annular elastic body interposed between the valve main body 2 and the cover 3.

The valve main body 2 comprises: an internal passage 5 for allowing exhaust gas to flow, which is formed in a columnar shape and is formed in an axial direction on an axis thereof; a first end portion 7 in which an inflow port 6 of the internal passage 5 opens; a thread portion 21 on an outer circumferential surface of the first end portion 7, which screws together with the housing; a second end portion 9 in which an outflow port 8 of the internal passage 5 opens; and a mating portion 10 formed on an outer circumferential surface of the second end portion 9.

Furthermore, a valve body accommodating space 11 is formed inside the valve main body 2, part way through the internal passage 5. The valve body accommodating space 11 is provided with: a valve body 13 for opening/closing an inflow-side passage 12 joining the valve body accommodating space 11 with a discharge chamber (not depicted) of the compressor; a biasing member 14 comprising a compression spring for biasing the valve body 13 in a direction of closure of the inflow-side passage 12; and a covering body (spring receiver) 15 which is provided at the outflow port 8 so as to close off the valve body accommodating space 11, and which receives the biasing member (compression spring) 14 disposed between the covering body (spring receiver) 15 and the valve body 13. The outflow port 8 section has a larger inner diameter than the valve body accommodating space 11, and the covering body (spring receiver) 15 is mated in the outflow port 8 so as to close off the valve body accommodating space 11. An outflow-side passage 16 joining the valve body accommodating space 11 and the exterior of the valve main body 2 is then formed in the center of the covering body (spring receiver) 15.

The mating portion 10 is configured by forming an annular groove 18 substantially in the center of a side face of a head portion 17 of the valve main body 2 which is formed with a substantially hexagonal cross section of predetermined width in an axial direction from the second end portion 9. That is to say, the annular groove 18 having a smaller inner diameter than a distance between the axis of the valve main body 2 and the outside surface of the head portion 17 is formed substantially in the center in the axial direction of the outer circumferential surface of the head portion 17, and hook portions 311a-311d of leg portions 31a-31d of the cover 3 which will be described later can be locked to the mating portion 10 using an outflow-side face of the annular groove 18 substantially perpendicular to the axis thereof as a locking face 18a.

Furthermore, as also shown in fig. 4(a) and (b), an axially-protruding annular boss portion 19 is integrally formed with the second end portion 9 about the axis thereof, and an abutment face 9a for abutting the 0-ring 4 is formed along the entire circumference around the boss portion 19. The 0-ring 4 comprises an elastic material such as nitrile rubber, silicone rubber, EPDM, or a soft resin, which is well known per se.

The inner diameter of the boss portion 19 is formed to be larger than the inner diameter of the valve body accommodating space 11 and is formed to be almost equal to the outer diameter of the covering body 15.

Furthermore, the outer diameter of the boss portion 19 is formed to be almost equal to the inner diameter of the 0-ring 4, which means that the 0-ring 4 is set in position when it is fitted around the boss portion 19 and there is no radial movement of the 0-ring 4.

The cover 3 which will be described later is mounted on the second end portion 9 of the valve main body 2 with the 0-ring 4 interposed.

The cover 3 is formed by machining a sheet-like metal material. As also shown in fig. 4(c) and (d), and fig. 5(a), the cover 3 comprises: leg portions 31a, 31b, 31c, 31d which mate with the mating portion 10 of the valve main body 2; and a shielding portion 32 axially opposite the second end portion 9.

The shielding portion 32 is formed with a substantially hexagonal shape to match the cross-sectional shape of the head portion 17 of the valve main body 2. The leg portions 31a, 31b, 31c, 31d are formed by bending each of four adjacent sides, excluding two sides, on an outer circumferential edge of the shielding portion 32. That is to say, the leg portions 31a-31d extending radially outward in a radiating form are respectively provided on those four sides on the outer circumferential edge of the shielding portion 32, and the leg portions 31a-31d are formed by bending substantially at right angles in relation to the shielding portion 32. Gaps (slits) S are therefore formed between the circumferentially-adjacent leg portions which are formed by bending (between the leg portion 31a and the leg portion 31b, between the leg portion 31b and the leg portion 31c, and between the leg portion 31c and the leg portion 31d). The hook portions 311a-311d, which are capable of locking to the locking face 18a of the annular groove 18, are then formed at tip end portions of each of the leg portions 31a-31d by curving tip end portions of the leg portions inward.

The lengths of the leg portions 31a-31d (distances between the shielding portion 32 and tip ends of the hook portions) are set so that the hook portions 311a-311d of the leg portions 31a-31d are locked to the mating portion (locking face 18a of the annular groove 18) in a state in which the 0-ring 4 is compressed while interposed between the shielding portion 32 and the valve main body 2.

Furthermore, the shielding portion 32 is formed with a radially-extending groove portion 33 which is indented from a portion facing the inside of the 0-ring 4 up to an outer edge of the shielding portion 32. That is to say, the groove portion 33 is formed as a bulge so that part of the shielding portion 32 is remote from the second end portion 9 from the middle of the shielding portion 32 up to the two sides on the outer edge of the shielding portion 32 where the leg portions 31a-31d are not provided. Accordingly, a radial opening portion 34 where leg portions are not formed over a center angle range of approximately 120° is formed on the outer circumferential surface of the cover 3, and this radial opening portion 34 is formed continuously so as to be aligned with the groove portion 33.

The width between the radially-opposing pairs of leg portions of the cover 3 (the distance between the leg portion 31a and the leg portion 31d) is formed to be almost equal to the outer diameter of the 0-ring 4, and the width of the groove portion 33 is formed to be smaller than the width between the radially-opposing pairs of leg portions, and is almost equal to the inner diameter of the 0-ring 4.

A U-shaped abutment face 3a (see fig. 4(c)) abutted by the 0-ring 4 is therefore formed around the groove portion 33 of the shielding portion 32 of the cover 3, that is, between the groove portion 33 and the respective leg portions 31a-31d, and the 0-ring 4 is not abutted by the cover 3 over a center angle range of approximately 120° . Furthermore, the radial opening portion 34 is formed by not providing the leg portions on two adjacent sides of the shielding portion 32, so the radial opening portion 34 is formed with a width which is almost equal to the width between the radially-opposing pairs of leg portions, that is to say, a width which is substantially equal to the outer diameter of the 0-ring.

Accordingly, when the 0-ring 4 is arranged around the boss portion 19 on the second end portion 9 of the valve main body 2, and, in that state, the cover 3 is assembled from the axial direction with the second end portion of the valve main body 2, the 0-ring 4 is sandwiched, in a state of close contact, between the abutment face 9a around the boss portion 19 on the second end portion 9, and the U-shaped abutment face 3a around the groove portion 33 of the cover 3, and, when the hook portions 311a-322d of the leg portions 31a-31d are locked to the locking face 18a of the annular groove 18 constituting the mating portion 10 so that the cover 3 is mated with the head portion 17 of the valve main body 2, the 0-ring 4 is fixedly sandwiched, in a state of compression, between the second end portion 9 of the valve main body 2 and the shielding portion 32.

Furthermore, a gas discharge passage 36 enabling communication between the inside and the outside of the 0-ring 4 is formed by the gap between the groove portion 33 formed on the shielding portion 32, and the end face of the second end portion 9 and the 0-ring 4.

Accordingly, if the internal pressure of the compressor reaches an abnormal pressure so that the valve body 13 of the safety valve 1 is lifted and high-pressure exhaust gas is discharged from the outflow port 8 (outflow-side passage 16) via the valve body accommodating space 11, then the direction of the discharged exhaust gas is altered by 90° on colliding with the shielding portion 32, as shown in fig. 3(b) and 4(d), the exhaust gas flows along the groove portion 33, passes through the gap between the 0-ring 4 and the groove portion 33, and is ejected to outside the compressor via the groove portion 33 and the radial opening portion 34.

For this reason, in the configuration above, the gaps (slits) S between each of the leg portions are positioned radially outside the 0-ring 4. Accordingly, the 0-ring 4 provides a seal between the shielding portion 32 and the second end portion 9 inwardly from the gaps (slits) S between the leg portions, so the exhaust gas is not guided to the gaps (slits) S between the leg portions, and it is possible to avoid the problem of exhaust gas being ejected from the gaps (slits) S.

Furthermore, a general-purpose annular elastic body such as the 0-ring 4 may be used as the elastic body interposed between the valve main body 2 and the cover 3, so there is no need to use an elastic body having a complex shape, and it is possible to avoid difficulties associated with molding the elastic body and to avoid increased manufacturing costs.

In addition, since the direction of opening of the groove portion 33 and the radial opening portion 34 of the cover 3 is set in any direction, it is also possible to set the direction of ejection of the high-pressure exhaust gas in any direction, therefore enabling simple assembly such that the desired ejection direction can also be achieved during assembly.

Furthermore, in the example described above, the boss portion 19 is provided on the second end portion 9 of the valve main body 2, and the 0-ring 4 is disposed around the boss portion 19, so it is possible to avoid the problem of the 0-ring 4 moving radially and falling out from the radial opening portion 34 when the safety valve 1 is actuated in order to eject high-pressure exhaust gas from the outflow-side passage 16, with the direction of the exhaust gas being altered so that it is released along the groove portion 33.

Moreover, in the example described above, the leg portions 31a, 31b, 31c, 31d extending radially outward from four respective sides of the shielding portion 32 of the cover 3 are bent through substantially 90° in relation to the shielding portion 32, as also shown in fig. 5(a), whereby the plurality of leg portions 31a-31d are integrally formed with the outer edge of the shielding portion 32. In addition to the example described above, as shown in fig. 5(b), only one leg portion 31a out of the plurality of leg portions 31a-31d formed circumferentially on the shielding portion 32 may be formed integrally to extend radially outward from the outer edge of the shielding portion 32, and the other leg portions 31b, 31c, 31d may be linked along the circumferential direction of the shielding portion 32 starting from that leg portion 31a so that all of the leg portions 31a-31d are integrally formed.

Fig. 6-8 show a second embodiment of the compressor safety valve 1.

This example differs from the configuration of fig. 1-3 in that the boss portion 19 is not formed on the second end portion 9 of the valve main body 2.

Furthermore, in this example, as shown in fig. 5(b), only one leg portion 31a is formed integrally to extend radially outward from the outer edge of the shielding portion 32, and the other leg portions 31b, 31c, 31d are linked along the circumferential direction of the shielding portion 32 starting from that leg portion 31a so that all of the leg portions 31a-31d are integrally formed, and restricting portions 35a, 35b for restricting radial movement of the 0-ring 4 are provided at the radial opening portion 34.

The restricting portions 35a, 35b are formed by means of protrusions protruding from the leg portions 31a, 31d into the radial opening portion 34, and the effective width of the radial opening portion 34 (the width between the restricting portions 35a, 35b) is formed to be effectively smaller than the outer diameter of the 0-ring 4.

It should be noted that this example described a case in which the leg portion 31a located at one end among the plurality of leg portions 31a-31d linked along the circumferential direction was integrally formed with the shielding portion 32, but any of the other leg portions 31b, 31c, 31d may be integrally formed with the shielding portion 32.

The other component parts are the same as those in the first embodiment described above and are therefore assigned the same reference numbers in the same locations; these will not be described again.

Accordingly, in the second embodiment, the boss portion 19 for restricting radial movement of the 0-ring 4 is not formed on the valve main body 2, so if there were no restricting portions 35a, 35b, the problem of the 0-ring 4 being radially moved and pushed out from the radial opening portion 34 by high-pressure gas ejected from the outflow port 8 would become a concern. However, since the restricting portions 35a, 35b protrude from the leg portions 31a, 31d into the radial opening portion 34, making the width of the radial opening portion 34 smaller than the outer diameter of the 0-ring 4 (since the width between the restricting portions 35a, 35b is smaller than the outer diameter of the 0-ring 4), it is possible to avoid the problem of the 0-ring 4 being pushed out from the radial opening portion 34.

Furthermore, the cover portion 3 may also be formed by providing the restricting portions 35a, 35b so as to protrude into the radial opening portion 34 from the leg portions 31a, 31d in a configuration in which the leg portions 31a, 31b, 31c, 31d extending radially outward from four respective sides of the shielding portion 32 are bent through substantially 90° in relation to the shielding portion 32, as also shown in fig. 5(a).

Accordingly, with this configuration, similarly to the embodiment above, if the internal pressure of the compressor reaches an abnormal pressure so that the valve body 13 of the safety valve 1 is lifted and high-pressure exhaust gas is discharged from the outflow port 8 (outflow-side passage 16) via the valve body accommodating space 11, then the direction of the discharged exhaust gas is altered by 90° on colliding with the shielding portion 32, the exhaust gas flows along the groove portion 33, passes through the gap between the 0-ring 4 and the groove portion 33, and is released from the safety valve 1.

The gaps (slits) S are formed between the leg portions 31b-31d of the cover 3 and the shielding portion 32, but these gaps are positioned radially outside the 0-ring 4. Consequently, the 0-ring 4 provides a seal between the shielding portion 32 of the cover 3 and the second end portion 9 of the valve main body 2 in the area before reaching the gaps (slits) S, so it is possible to avoid the problem of exhaust gas being ejected from the gaps (slits) S.

Furthermore, a general-purpose elastic body such as the 0-ring 4 is used as the elastic body interposed between the valve main body 2 and the cover 3, so there is no need to use an elastic body having a complex shape, and it is possible to avoid difficulties in molding the elastic body and to avoid increased costs.

In addition, since the direction of opening of the groove portion 33 and the radial opening portion 34 of the cover 3 is set in any direction, it is also possible to freely change the direction of ejection of the high-pressure exhaust gas, therefore enabling simple assembly such that the desired ejection direction can also be achieved during assembly.

It should be noted that the embodiments above described an example of using the 0-ring 4 as the annular elastic body, but any shape of elastic body may be used, provided that it is sandwiched between the second end portion 9 of the valve main body 2 and the shielding portion 32 of the cover 3, is closely contacted along the entire circumference with the end face of the second end portion of the valve main body 2, and is closely contacted with the shielding portion 32 of the cover 3 excluding the part opposite the groove portion 33.

Furthermore, in the exemplary configuration described above, the cover 3 was formed by machining a metal plate, but the same operational effects can still be achieved if the same cover is formed by means of a resin material.

In addition, in the abovementioned exemplary configuration of the cover 3 comprising the shielding portion 32 having a substantially hexagonal shape in plan view, leg portions were not provided on two adjacent sides of the shielding portion 32, the radial opening portion 34 was formed over a center angle range of approximately 120° , and the groove portion 33 extended across those two sides on the outer edge of the shielding portion 32 where the leg portions 31a, 31d were not provided (see fig. 4(c) and (d), etc.), but, as shown in fig. 9, a leg portion need not be provided on only one side of the shielding portion 32 of the cover 3, the radial opening portion 34 may be formed over a center angle range of approximately 60° on the outer circumferential surface of the cover 3, and the groove portion 33 may extend across that one side on the outer edge of the shielding portion 32 where that leg portion is not provided.

The cover 3 shown in fig. 9 is illustrated as an example in which leg portions 31a, 31b, 31c, 31d, 31e extending radially outward from five respective sides of the shielding portion 32 are bent through substantially 90° in relation to the shielding portion 32 so that the plurality of leg portions 31a-31e are integrally formed with the outer edge of the shielding portion 32, but, similarly to the configuration of fig. 5(b), only one of the plurality of leg portions 31a-31e provided in the circumferential direction of the shielding portion 32 may be integrally formed with the outer edge of the shielding portion 32, and the other leg portions may be linked along the circumferential direction of the shielding portion 32 starting from said leg portion so that all of the leg portions 31a-31e are integrally formed.

In this example of the cover 3, the opening widths of the groove portion 33 and the radial opening portion 34 are smaller than those of the cover 3 shown in fig. 1-8, so greater directionality can be imparted to the direction of ejection of the exhaust gas. Furthermore, in this example, when the 0-ring 4 is interposed between the valve main body 2 and the cover 3, the width of the radial opening portion 34 is smaller than the outer diameter of the 0-ring 4, so there is no need to separately provide members constituting the restricting portions 35a, 35b such as shown in fig. 6 and 7, and the leg portions 31a, 31e on both sides of the radial opening portion 34 can be made to serve as restricting portions 35c, 35d.

It should be noted that the cover 3 shown in fig. 9 is illustrated as an example in which the shielding portion 32 has a hexagonal shape to match the cross-sectional shape of the head portion 17 of the valve main body 2, but the sides of the shielding portion 32 do not all need to be equal (a regular hexagonal shape is not necessary), and sides adjacent to the side formed without a leg portion may be relatively longer so that the part where the groove portion 33 and the radial opening portion 34 open may be relatively further from the center of the cover 3. Such a configuration makes it possible to further increase directionality in terms of the direction in which exhaust gas is ejected.

### [Description of Reference Symbols]

- 1: Safety valve
- 2: Valve main body
- 3: Cover
- 4: 0-ring
- 5: Internal passage
- 6: Inflow port
- 7: First end portion
- 8: Outflow port
- 9: Second end portion
- 10: Mating portion
- 19: Boss portion
- 31a, 31b, 31c, 31d, 31e: Leg portion
- 32: Shielding portion
- 33: Groove portion
- 34: Radial opening portion
- 35a, 35b, 35c, 35d: Restricting portion

## Claims

1. A compressor safety valve (1) for expelling exhaust gas to the outside when an internal pressure of a compressor (100) rises above a predetermined pressure, the compressor safety valve comprising:
a columnar valve main body (2) comprising an internal passage (5) through which exhaust gas flows, a first end portion (7) in which an inflow port (6) of the internal passage (5) opens, a second end portion (9) in which an outflow port (8) of the internal passage (5) opens, and a mating portion (10) formed on an outer circumferential surface;
a cover (3) comprising leg portions (31a, 31b, 31c, 31d) which mate with the mating portion (10) of the valve main body (2), and a shielding portion (32) opposite the second end portion (9); and
an annular elastic body which is sandwiched between the second end portion (9) of the valve main body (2) and the shielding portion (32) of the cover (3) so as to surround the outflow port (8),
**characterized in that** a groove portion (33) is formed in the shielding portion (32), from a portion facing the inside of the elastic body up to an outer edge of the shielding portion (32).

2. The compressor safety valve as claimed in claim 1, **characterized in that** the elastic body is closely contacted along the entire circumference with an abutment face (9a) of the second end portion (9) of the valve main body (2), and is closely contacted with the shielding portion (32) of the cover (3) excluding the part opposite the groove portion (33).

3. The compressor safety valve as claimed in claim 1 or 2, **characterized in that** the elastic body is an 0-ring (4).

4. The compressor safety valve as claimed in claim 1, **characterized in that** a boss portion (19) having a smaller outer diameter than the inner diameter of the elastic body is formed on the abutment face (9a) of the valve main body (2) so as to protrude from the second end portion (9), and
the elastic body is arranged around the boss portion (19) provided on the second end portion (9) of the valve main body (2).

5. The compressor safety valve as claimed in claim 1, **characterized in that** a radial opening portion (34) is formed in the cover (3) adjacently to the groove portion (33) on the outer edge of the shielding portion (32), and restricting portions (35a, 35b, 35c, 35d) for restricting radial movement of the elastic body are further provided.

6. The compressor safety valve as claimed in claim 5, **characterized in that** the width of the radial opening portion (34) is formed to be smaller than the outer diameter of the elastic body by means of the restricting portions (35a, 35b, 35c, 35d).

7. The compressor safety valve as claimed in claim 6, **characterized in that** the restricting portions (35a, 35b) are formed by means of protrusions protruding from the leg portions (31a, 31d) into the radial opening portion (34).

8. The compressor safety valve as claimed in claim 6, **characterized in that** the restricting portions (35c, 35d) are formed by leg portions (31a, 31e) adjacent to the radial opening portion.

9. The compressor safety valve as claimed in claim 1, **characterized in that** a plurality of the leg portions (31a, 31b, 31c, 31d, 31e) are formed in a circumferential direction of the shielding portion (32), each of the leg portions (31a, 31b, 31c, 31d, 31e) being integrally formed with the outer edge of the shielding portion (32).

10. The compressor safety valve as claimed in claim 1, **characterized in that** a plurality of the leg portions (31a, 31b, 31c, 31d, 31e) are formed in a circumferential direction of the shielding portion (32), among which one leg portion (31a) is integrally formed with the outer edge of the shielding portion (32), and other leg portions (31b, 31c, 31d) are linked along a circumferential direction of the shielding portion (32) starting from the leg portion (31a) so that all of the leg portions (31a, 31b, 31c, 31d, 31e) are integrally formed.
